# EUROPÄISCHE PATENTSCHRIFT

(11) **EP 3 607 122 B1**
(45) Veröffentlichungstag und Bekanntmachung des Hinweises auf die Patenterteilung: **17.03.2021**
(21) Anmeldenummer: 18715674.0
(22) Anmeldetag: 04.04.2018
(51) Int. Cl.: D04H 1/42, D04H 1/541, D04H 1/64, G02B 5/02

(54) **ELEMENT ZUR LICHTMANIPULATION**
ELEMENT FOR MANIPULATING LIGHT
ÉLÉMENT DE MANIPULATION DE LUMIÈRE

(30) Priorität: 06.04.2017 DE 102017003362
(43) Veröffentlichungstag der Anmeldung: 12.02.2020
(73) Patentinhaber: Carl Freudenberg KG, 69469 Weinheim (DE)
(72) Erfinder: ROTH, Michael, 55131 Mainz (DE); SCHNEIDER, Ulrich, 64297 Darmstadt (DE); ALTUNCU, Sueleyman, 68305 Mannheim (DE); SENNE, Sarah, 64658 Fürth (DE); BIALEK, Jochen, 68549 Ilvesheim (DE)
(86) Internationale Anmeldenummer: PCT/EP2018/058520
(87) Internationale Veröffentlichungsnummer: WO 2018/185119

(56) Entgegenhaltungen:
- WO-A1-2017/031659
- DE-A1-102014 003 418
- US-A1- 2008 080 055

## Beschreibung

Die Erfindung betrifft die Verwendung eines Vliesstoffs als Lichtverteilungselement, sowie eine Lichtquelle umfassend ein derartiges Lichtverteilungselement.

Punktförmige Lichtquellen, wie zum Beispiel LED-Lampen, sind in vielen Anwendungen eine energieeffiziente Beleuchtungsmethode. Gleichzeitig ist es jedoch in vielen Fällen erwünscht eine Fläche oder einen Raum möglichst homogen, mit gleichmäßig verteilter Lichtstärke zu beleuchten. Um dieses Ziel zu erreichen, können verschiedene Verteilungs- und/oder Diffusionsmedien, wie zum Beispiel Papiere, optische Spezialfolien, oder Textilien eingesetzt werden. Neben einer gleichmäßigen Lichtverteilung sind in vielen Anwendungen weitere Lichtmanipulationen, wie zum Beispiel eine Kollimation des Lichts oder ein bestimmtes Verhältnis von Reflexion und Transmission erwünscht.

Papiere stellen sehr kostengünstige Diffusionselemente dar, die jedoch nur eine geringe Leuchtdichte haben. Mit der Verwendung optischer Spezialfolien können deutlich höhere Leuchtdichten erzielt werden. Nachteilig an ihnen ist jedoch, dass sie in der Regel nur aus einer Materialart bestehen. Für die Lichtmanipulation ist es jedoch oft notwendig Materialien mit unterschiedlichen Brechungsindices und anderen Eigenschaften in sehr kurzen Abständen zusammenzuführen. Durch den Einbau von Additiven, der Durchführung nachträglicher Oberflächenbehandlungen oder der Laminierung mehrerer Schichten können Folien zwar auf spezifische optische Eigenschaften eingestellt werden, jedoch bedarf dies weiterer kostenintensiver Prozessschritte. Im Falle mehrlagiger Spezialfolien ergibt sich ferner insbesondere unter Hitzeeinwirkung zusätzlich das Problem der potentiellen Delaminierung oder Deformierung aufgrund unterschiedlicher Wärmeausdehnungskoeffizienten der verwendeten Materialien.

Vor diesem Hintergrund hat sich die Verwendung von textilen Materialien, und insbesondere Vliesstoffen als Lichtverteilungselemente als günstig erwiesen, da die verschiedensten strukturellen und stofflichen Zusammensetzungen auf einfache Weise durch eine geeignete Auswahl von Fasermischung, Vlieslegung und Vliesverfestigung in einem Prozessablauf erzeugt werden können. Hierdurch können bei guter Performance die Herstellungskosten verglichen mit anderen Diffusionsmedien gering gehalten werden.

Aus der WO 2013/012974 A1 ist eine Lichtquelle bekannt, die ein Leuchtmittel, eine Lichtführungsplatte und eine Diffusionsplatte umfasst. Die Diffusionsplatte kann aus einem Vliesstoff mit einem bestimmten Flächengewicht bestehen.

In der WO 2013/116193 A1 ist ein Anzeigesystem beschrieben, in dem ein Diffusionselement aus Vliesstoff zwischen der Lichtquelle und dem LCD-Bildschirm angeordnet ist.

Die WO 2006/129246 A2 beschreibt eine Lichtquelle, die ein auf einem Substrat angeordnetes Leuchtmittel und ein Lichtverteilungselement aus Vliesstoff mit einer speziellen Dichteeinstellung aufweist.

In den genannten Druckschriften steht jeweils das Lichtsystem im Vordergrund. In Bezug auf die Einstellung der Vliesstoffeigenschaften zur Optimierung der Lichtdiffusionseigenschaften finden sich keine ausreichenden technischen Informationen.

Aus der EP 1891620 B1 ist eine Lichtquelle bekannt, deren Strahlengang des emittierten Lichtes durch ein mehrlagiges Vliesstoffelement verbreitert wird. Dabei besitzt das mehrlagige Vliesstoffelement einen Gradienten in der Materialdichte (in z -Richtung) um zum einen eine größere Distanz zu der Lichtquelle zu schaffen und zum anderen um das Licht diffus zu gestalten. Dieser Gradient wird durch die Verwendung von mehreren Vliesstofflagen übereinander erhalten, die das Streumedium bilden. Der Gradient wird wie folgt hergestellt: Eine erste Lage Vliesstoff mit einer geringen Materialdichte, die nächst zu der Leuchtquelle angebracht wird mit einer zweiten dichteren Vliesstofflage, die das Licht streut, kombiniert.

Nachteilig an den in dieser Druckschrift beschriebenen homogenen, anisotropen Vliesstoffen ist, dass sie zwar das Licht gut streuen können aber gleichzeitig den transmittierten Lichtstrom sehr stark reduzieren. Durch die Kombination von mehreren textilen Vliesstofflagen wird der Lichttransmissionsgrad noch stärker reduziert, was nachteilig für die Leuchtdichte einer Flächenlichtquelle ist. Darüber hinaus ist an der Verwendung von mehreren Lagen nachteilig, dass zwischen den einzelnen Vliesstofflagen Falten entstehen können, die die homogene Lichtausbreitung behindern und die optische Güte verringern. Dies kann u.a. zu einem Schattenwurf in einem Lichtelement führen. Zudem wird durch einen mehrlagigen Aufbau die Bautiefe einer Lichtquelle erhöht, was einen Nachteil bei der Herstellung von kompakten, flachen Displays mit sich bringt.

Die WO 2015/135790 A1 beschreibt die Verwendung eines Vliesstoffs als Lichtverteilungselement sowie eine Lichtquelle umfassend ein derartiges Lichtverteilungselement. Der Vliesstoff besteht hierbei aus einem homogen Polyester-Nassvliesstoff aus Matrixfasern und Bindefasern mit guten Lichtdiffusionseigenschaften.

Nachteilig an dem beschriebenen Vliesstoff ist, dass er zwar durchaus gute Lichtdiffusionseigenschaften hat, allerdings geringe Lichttransmissionsgrade, was die Lichtausbeute der hier genannten Lichtquelle deutlich verschlechtert und somit zu einem erhöhten Energiebedarf im Betrieb der Lichtquelle führt, um die gleiche Lichtmenge zu emittieren.

Die WO 2013/142084 A1 beschreibt eine optische Spezialfolie mit exakt definierten Oberflächenstrukturen. Diese, oft mehrlagigen, Spezialfolien können durch die Geometrie der Oberflächenstrukturen, die Materialzusammensetzungen und verschiedene Additive auf verschiedene optische Anforderungen eingestellt werden.

Nachteilig an diesen Folien ist, dass sie einen komplizierten Aufbau aufweisen müssen, um zu den erwünschten optischen Eigenschaften zu kommen. Im Falle der Vliesstoffherstellung können durch die Fasermischung, die Variante der Vlieslegung und die Art der Vliesverfestigung verschiedene strukturelle und stoffliche Zusammensetzungen in einem Prozessablauf geschaffen werden. Durch Additive, nachträgliche Oberflächenbehandlung oder Laminierung mehrerer Schichten können Folien zwar ebenfalls auf spezifische optische Eigenschaften eingestellt werden, jedoch bedarf dies weiterer kostenintensiver Prozessschritte. Zudem führt das Laminieren von verschiedenen Folien immer wieder zu Grenzflächen zwischen den Folien, die zu ungewollten optischen Brechungen führen, die die Funktion der nachfolgenden Strukturen negativ beeinträchtigen. Im Falle mehrlagiger Spezialfolien ergibt sich insbesondere unter Hitzeeinwirkung zusätzlich das Problem der potenziellen Delaminierung oder Deformierung, aufgrund unterschiedlicher Wärmeausdehnungskoeffizienten der verwendeten Materialien.

Ein weiterer nachteiliger Aspekt besteht darin, dass Folien zwar grundsätzlich gute optische Eigenschaften haben, aber nur, wenn sie komplett unbeschädigt sind. Durch die Verarbeitung solcher Folien kommt es aber oft zu Defekten insbesondere mechanischer Natur. Dies können Knicke, Verschmutzungen und ähnliches sein, welche dann zu optischen Fehlern in einer Leuchte führen können.

Aus der WO 2017/031659 A1 ist ein Diffusorelement bekannt, umfassend: (a) einen Vliesstoff, der Fasern mit einem Durchmesser von weniger als etwa 50 µm und einem Faser - Aspektverhältnis von Länge / Durchmesser von mehr als etwa 5, und (b) eine poröse Harzbeschichtung auf den Oberflächen der Fasern des Vliesstoffs aufweist. Die poröse Harzbeschichtung hat Harzporen mit einer Größe von 200 nm bis 2 µm. Diese Porengrößen führen zu niedrigen Gurleyzahlen (<200 sec/100 ml) und haben den Nachteil die Anzahl der Streuzentren zu erhöhen.

Aus der DE 10 2014 003 418 A1 ist die Verwendung eines Nassvliesstoffs, der
a1) 5-50 Gew.% Matrixfasern und
a2) 50-95 Gew.% zumindest teilweise thermisch verschmolzene Bindefasern oder
b1) 50-80 Gew.% Matrixfasern und
b2) 20-50 Gew.% Bindemittel enthält, als Lichtverteilungselement bekannt.

Dieser Vliesstoff weist bereits hervorragende Lichtdiffusionseigenschaften auf. Jedoch ist es für manche Anwendungen wünschenswert die Leuchtdichte zu erhöhen.

Der Erfindung liegt die Aufgabe zu Grunde ein Lichtverteilungselement bereitzustellen, das neben sehr guten Lichtdiffusionseigenschaften auch eine hohe Leuchtdichte bzw. einen hohen Lichttransmissionsgrad, aufweist. Darüber hinaus soll das Lichtverteilungselement sehr gute Lichtintensitätsverteilungen punkt- und/oder linienförmiger Lichtquellen, wie beispielsweise LEDs und/oder CCFLs mit einer preiswerten Herstellung kombinieren.

Diese Aufgabe wird erfindungsgemäß gelöst durch die Verwendung eines Vliesstoffs, bevorzugt eines NassVliesstoffs, als Lichtverteilungselement, wobei der Vliesstoff
a1) 1-50 Gew.% Matrixfasern,
a2) 50-99 Gew.% zumindest teilweise thermisch verschmolzene Bindefasern, und
b) 20-200 Gew.% mindestens eines Füllpolymers aufweist, wobei sich die Gewichtsanteile von Matrixfasern, Bindefasern und Füllpolymer jeweils auf das Gesamtgewicht des Vliesstoffs ohne Füllpolymer beziehen und wobei
   - die Matrixfasern mindestens ein Matrixfaserpolymer und die Bindefasern mindestens ein Bindefaserpolymer enthalten,
   - Matrixfaserpolymer und/oder Bindefaserpolymer unabhängig voneinander einen Brechungsindex "n" von 1,3 bis 1,7, bevorzugt von 1,5 bis 1,65 aufweisen,
   - das Füllpolymer einen Brechungsindex "n" von 1,2 bis 1,7 aufweist,
   - die Differenz zwischen dem Brechungsindex des Matrixfaserpolymers und dem Brechungsindex des Füllpolymers und/oder die Differenz zwischen dem Brechungsindex des Bindefaserpolymers und dem Brechungsindex des Füllpolymers von 0,1 bis 0,4 beträgt, und
   - der Vliesstoff eine Gurleyzahl > 250 Sek./100 ml.

Überraschend wurde gefunden, dass der erfindungsgemäße Vliesstoff sehr hohe Leuchtdichten aufweist, ohne dass die guten Lichtdiffusionseigenschaften des Vliesstoffs verschlechtert werden. Ein weiterer Vorteil des erfindungsgemäßen Vliesstoffs ist darin zu sehen, dass er eine besonders hohe Gleichmäßigkeit aufweist. Dies spiegelt sich zum Beispiel in einem sehr gleichmäßigen Helligkeitseindruck (Leuchtdichte, [L]=cd/m2) wieder. Dies zeigt sich bei Leuchtdichtemessungen über eine definierte Fläche unter Verwendung einer ortsauflösenden Leuchtdichtekamera. Hierbei ergibt sich, dass die einzelnen Leuchtdichtewerte L(x,y) innerhalb einer definierten Fläche eine geringe Streuung (Standardabweichung σ) aufweisen. Dies ist gleichbedeutend zu einer sehr homogenen Ausleuchtung einer Fläche.

Erfindungsgemäß weist der Vliesstoff eine Gurleyzahl von mehr als 250 Sek. /100 ml, beispielsweise von 250 Sek. /100 ml bis 5000 Sek./ 100 ml, vorzugsweise von 300 Sek. /100 ml bis 5000 Sek./100 ml, noch bevorzugter von 400 Sek./ 100 ml bis 5000 Sek./ 100ml, insbesondere von 500 Sek. /100 ml bis 5000 Sek./ 100 ml auf. Dies kann durch eine sehr geringe Porosität und Porengröße des Füllpolymers im erfindungsgemäßen Vliesstoff, so z.B. Porengrößen von 0,1 nm bis 150 nm, vorzugsweise von 1 nm bis 100 nm, erlangt werden. Dagegen ergeben z.B. Porengrößen von 1 bis 5 µm Gurleyzahlen von 1 bis 100 Sek./100 ml Luft. In einer bevorzugten Ausführungsform der Erfindung weist der Vliesstoff eine Porosität von weniger als 40%, beispielsweise von 1 bis 40% und/oder von weniger als 30%, beispielsweise von 5 bis 30% und/oder von 10 bis 30% auf.

Füllpolymere mit niedrigen Gurleyzahlen haben den Nachteil, zusätzliche Grenzflächen einzuführen, die die Streuung in einem zu hohen Maße erhöhen würden, was erfindungsgemäß nicht gewünscht ist.

In praktischen Versuchen konnte festgestellt werden, dass es mit dem erfindungsgemäßen Vliesstoff möglich ist, mittlere Leuchtdichten von mehr als 2200 cd/m², beispielsweise von 2200 cd/m² bis 3500 cd/m² zu erhalten, ohne dass sich die Lichtdiffusionseigenschaften wesentlich verschlechtern. Überraschenderweise ist es sogar möglich durch Aufbringen des Füllpolymers die Streuung der Leuchtdichte zu verringern. So kann der erfindungsgemäße Vliesstoff eine Streuung Sigma von weniger als 180 cd/m², beispielsweise von 50 cd/m² bis 180 cd/m², vorzugsweise von 80 cd/m² -150 cd/m², zeigen.

Dies ist deshalb überraschend, weil zu erwarten war, dass die Erhöhung der Anzahl der Grenzflächen durch Hinzufügung des Füllpolymers sich negativ auf die optischen Eigenschaften des Vliesstoffs auswirken würde. Insbesondere war zu erwarten, dass durch Reflexion an den Grenzflächen zwischen Füllpolymer b) und den Fasern a1 und a2 ein signifikanter Intensitätsverlust des Lichts, einhergehend mit einer geringeren Transmission, auftreten sollte. Dies ist jedoch überraschenderweise nicht der Fall.

Ohne sich erfindungsgemäß auf einen Mechanismus festzulegen wird vermutet, dass die unerwartet guten Lichttransmissionseigenschaften des Vliesstoffs darauf zurückzuführen sind, dass die Verwendung des Füllpolymers mit einem Brechungsindex "n" von 1,2 bis 1,7, bevorzugt von 1, 4 bis 1,65, noch bevorzugter von 1, 4 bis 1,55 und insbesondere von 1, 4 bis 1,5 dazu führt, dass nur wenige Totalreflexionen des Lichtes innerhalb des Vliesstoffs auftreten. Dabei wird der Brechungsindex gemessen nach DIN EN ISO 489:1999-08.

Zusätzlich weist der Vliesstoff hervorragende Lichtdiffusionseigenschaften auf. Dies wiederum war vor dem Hintergrund der unerwartet hohen Transmission überraschend, da üblicherweise gute Transmissionseigenschaften zu schlechteren Lichtdiffusionseigenschaften führen.

Mit dem erfindungsgemäßen Vliesstoff können überraschend hohe Leuchtdichten bei zusätzlich konstanter Diffusion des Lichtes und guten Lichtintensitätsverteilungen punktförmiger Lichtquellen, wie beispielsweise LEDs, erzielt werden.

Ein weiterer Vorteil des erfindungsgemäßen Vliesstoffs ist darin zu sehen, dass er eine sehr hohe Gleichmäßigkeit aufweist, dies spiegelt sich zum Beispiel in einer sehr gleichmäßigen Lichttransmission über die Fläche wieder.

Ebenfalls vorteilhaft an dem erfindungsgemäßen Vliesstoff sind seine guten mechanischen Eigenschaften. So zeichnet sich der erfindungsgemäße Vliesstoff vorzugsweise durch eine Weiterreißfestigkeit in mindestens einer Richtung von mehr als 0,6 N, beispielsweise von 0,6 N bis 1,5 N und/oder von 0,7 N bis 1,5 N, aus. Eine hohe Weiterreißfestigkeit ist beispielsweise bei dem Einbau des erfindungsgemäßen Vliesstoffs in einer Lichtquelle, beispielsweise beim Einspannen in einen LCD-Bildschirm, von Vorteil, da dies mit einer hohen mechanischen Beanspruchung einhergeht.

Ferner zeichnet sich der erfindungsgemäße Vliesstoff vorzugsweise durch eine hohe Höchstzugkraft in mindestens einer Richtung von mehr als 180 N, beispielsweise von 180 N bis 400 N, und/oder von 190 N bis 400 N, aus.

Ebenfalls vorteilhaft an dem erfindungsgemäßen Vliesstoff ist sein geringer Schrumpf, der vorteilhaft kleiner als 2 %, beispielsweise von 0,1 % bis 2 % ist.

Erfindungsgemäß enthalten die Matrixfasern ein Matrixfaserpolymer mit einem Brechungsindex "n" von 1,3 bis 1,7 , insbesondere bevorzugt von 1,5 bis 1,65 und/oder die Bindefasern ein Bindefaserpolymer mit einem Brechungsindex "n" von 1,3 bis 1,7, insbesondere bevorzugt von 1,5 bis 1,65, und das Füllpolymer weist einen Brechungsindex von "n" von 1,2 bis 1,7 auf. Dabei enthalten die die Matrixfasern das Matrixfaserpolymer vorteilhafterweise in einem Anteil von mindestens 90 Gew. %, noch bevorzugter von 95 bis 100 Gew.%, noch bevorzugter von 97 bis 100 Gew.% und/oder die Bindefasern das Bindefaserpolymer vorteilhafterweise in einem Anteil von mindestens 20 Gew. %, noch bevorzugter von 20 bis 80 Gew.% und insbesondere von 30 bis 70 Gew.% (sofern die Bindefasern als Mehrkomponentenfasern vorliegen) und/oder die Bindefasern das Bindefaserpolymer vorteilhafterweise in einem Anteil von mindestens 90 Gew. %, noch bevorzugter von 95 bis 100 Gew.%, noch bevorzugter von 97 bis 100 Gew.% (sofern die Bindefasern als Monokomponentenfasern vorliegen). Vorteilhaft an der Verwendung eines Matrixfaserpolymers und/oder Bindefaserpolymers mit einem Brechungsindex von "n" von 1,3 bis 1,7 ist, dass es gute Transmissionseigenschaften, insbesondere in Kombination mit dem Füllpolymer aufweist.

Das Füllpolymer weist erfindungsgemäß einen Brechungsindex "n" von 1,2 bis 1,7, bevorzugt von 1, 4 bis 1,65, noch bevorzugter von 1,4 bis 1,55 und insbesondere von 1,4 bis 1,5 auf. Vorteilhaft an der Verwendung eines Füllpolymers mit dem vorgenannten Brechungsindex ist, dass es gute Transmissionseigenschaften, insbesondere in Kombination mit den erfindungsgemäß eingesetzten Fasern und Bindemitteln zeigt.

Erfindungsgemäß beträgt die Differenz zwischen dem Brechungsindex des Matrixfaserpolymers und/oder des Bindefaserpolymers einerseits und dem Brechungsindex des Füllpolymers andererseits von 0,1 bis 0,4, und/oder von 0,1 bis 0,35 und/oder 0,1 bis 0,3. Vorteilhaft an der Einstellung einer vergleichsweise großen Differenz der Brechungsindices der vorgenannten Komponenten ist, dass die Diffusion hierdurch verbessert werden kann.

Das Füllpolymer kann auf einer und/oder beiden Seiten des Vliesstoffs als flächige Beschichtung und/oder teilweise im Inneren des Vliesstoffs vorliegen. Unter einer flächigen Beschichtung ist dabei zu verstehen, dass mehr als 90 %, bevorzugt 95 % bis 100 %, besonders bevorzugt 98 % bis 100 % der Oberfläche des Vliesstoffs mit dem Füllpolymer bedeckt sind. Erfindungsgemäß bevorzugt liegt das Füllpolymer sowohl als fächige Beschichtung als auch zumindest teilweise im Inneren des Vliesstoffs, insbesondere in den Faserzwischenräumen, vor, da hierdurch eine besonders gute Transmission innerhalb des Vliesstoffs erzielt werden kann.

Das Füllpolymer kann als Bindemittel fungieren und somit zur Festigkeit des Vliesstoffs beitragen. Diese Funktion kann es beispielsweise dann erfüllen, wenn es in einen Faserflor eingebracht und anschließend ausgehärtet wird. Vorzugsweise fungiert das Füllpolymer jedoch nicht oder nicht wesentlich als Bindemittel.

In einer bevorzugten Ausführungsform der Erfindung ist das Füllpolymer ausgesucht aus der Gruppe bestehend aus Polyacrylaten, Polymethacrylaten, Polyurethanacrylaten und Polyurethanmethacrylaten, Polyurethanen, Polyamiden, Polyvinyledenflourid (PVDF), Polyetheretherketon (PEEK), Polycarbonat (PC), Polyolefine (PO), Cyclische Polyolefincopolymere(COC) sowie deren Gemische.

Die Füllpolymere, vorzugsweise die vorgenanntenFüllpolymere, können auch in Form von Homopolymeren oder als Copolymere eingesetzt werden. Als Copolymere sind beispielsweise statistische Copolymere, Gradientencopolymere, alternierende Copolymere, Blockcopolymere oder Propfcopolymere geeignet. Die Copolymere können aus zwei, drei, vier oder mehr verschiedenen Monomeren bestehen (Terpolymere, Tetrapolymere).

Besonders bevorzugt ist das Füllpolymer ausgesucht aus der Gruppe bestehend aus Polyacrylaten, Polymethacrylaten, Polyurethanacrylaten und Polyurethanmethacrylaten, Polyurethanen sowie deren Copolymere, insbesondere Styrolacrylate, und Gemischen.

Erfindungsgemäß bevorzugt sind die Acrylate, Methacrylate mittels einer radikalischen Polymerisation hergestellt, wobei bevorzugt als monofunktionelle Monomere beta-ungesättigte Carbonsäuren, deren Salze, deren Ester, Amide oder Nitrile eingesetzt werden. Dabei ist an der beta-Position eine Doppelbindung oder Dreifachbindung enthalten. Die Ester und Säuren weisen bevorzugt die allgemeine Formel R1 R2C=C-COOR3 auf. Dabei sind R1, R2 und R3 organische Reste oder H. Die organischen Reste sind insbesondere Alkyl, Aryl und Alkaryl. Die Alkylreste, insbesondere R3, sind insbesondere unverzweigte oder verzweigte C1 bis C20 Reste, bevorzugt Methyl, Ethyl, Propyl, Isopropyl, Ethyl-2-n-propyl, Benzyl-2-n-propyl, Butyl, Isobutyl, Pentyl, Hexyl, Octyl, Ethylhexyl, Decyl, Isodecyl, Stearyl, Lauryl, Cyclohexyl, Isobornyl, 2-Hydroxyethyl, Ethoxy-Ethoxy, Furfuryl, Tetrahydrofurfuryl, oder Arylreste wie Benzyl, Phenyl und Phenoxyethyl. Bevorzugt sind auch die entsprechenden Verbindungen, die an Stelle der Estergruppe eine Amidgruppe aufweisen.

In bevorzugten Ausführungsformen der Erfindung sind die monofunktionellen Monomere Acrylate, Methacrylate, Acrylamide, Methacrylamide oder Derivate davon. Geeignete Monomere sind beispielsweise Ester der Acrylsäure und Methacrylsäure und deren Derivaten, wobei der Esterbestandteil bis zu 20 C-Atomen im Rest auweist, so z.B. Methyl, Ethyl, Propyl, Isopropyl, Ethyl 2-n-propyl, Benzyl 2-n-propyl, Butyl, Isobutyl, Pentyl, Hexyl, Octyl, Ethylhexyl, Decyl, Isodecyl, Stearyl, Lauryl, Cyclohexyl, Isobornyl, Phenyl, Benzyl, Phenoxyethyl, 2-Hydroxyethyl, Ethoxy-Ethoxy, Furfuryl, Tetrahydrofurfuryl ist.

Besonders bevorzugt sind insbesondere Methyl-, Ethyl-, Propyl-, Isopropyl-, Ethyl 2-n-propyl-, Benzyl 2-n-propyl-, Butyl-, Isobutyl-, Pentyl-, Hexyl-, Octyl-, Ethylhexyl- acrylate; Ethylenglycol-methylether-acrylat, Ethylenglycoldicyclopentenylether-acrylat, Poly(ethylenglycol)-methylether-acrylate mit einem Molekulargewicht von ca. 200 bis 500, Poly(propylenglycol)-acrylate mit einem Molekulargewicht von ca. 200 bis 500.

Es können auch Gemische der bezeichneten Monomere eingesetzt werden.

Erfindungsgemäß bevorzugt ist das Füllpolymer mittels einer radikalischen Polymerisation hergestellt, wobei zusätzlich zu den monofunktionellen Monomeren auch bifunktionelle oder mehrfunktionelle Monomere eingesetzt werden können. Als bifunktionelle oder mehrfunktionelle Monomere für die radikalische Polymerisation eignen sich insbesondere Verbindungen, die an zwei oder mehr Positionen im Molekül polymerisieren und/oder vernetzen können. Dadurch kann während der Polymerisation ein Netzwerk entstehen. Solche Verbindungen weisen bevorzugt zwei identische oder ähnliche reaktive Funktionalitäten auf. Alternativ können Verbindungen eingesetzt werden, die mindestens zwei unterschiedlich reaktive Funktionalitäten aufweisen. So kann eine reaktive Gruppe polymerisieren und die andere reaktive Gruppe, die nicht an der Polymerisation teilhat, gezielt vernetzt werden.

Das Füllpolymer könnte hergestellt worden sein ausgehend von einem Füllpolymeredukt mit einem Schmelzpunkt und/oder der Erweichungspunkt, der unter dem Schmelzpunkt des Matrixfaserpolymers und/oder des Bindefaserpolymers liegt. Hierdurch kann das Füllpolymer gut verfilmen was homogene optische Eigenschaften ermöglicht.

In einer bevorzugten Ausführungsform der Erfindung wird das Füllpolymer so ausgewählt und/oder kombiniert, dass sein Glaspunkt, Filmbildungstemperatur bzw. sein Schmelzpunkt es ermöglicht, die Filmbildung der Beschichtung so einzustellen, dass die optischen Eigenschaften auf eine spezifische Anwendung angepasst werden können.

Die Menge, in der das Füllpolymer in und/oder auf dem Vliesstoff vorliegt kann in Abhängigkeit von dessen gewünschten Eigenschaften variieren. Als geeignet haben sich Mengen im Bereich von 20 Gew. % bis 200 Gew.%, noch bevorzugter von 25 Gew.% bis 200 Gew.%, noch bevorzugter von 30 Gew.% bis 200 Gew.%, besonders bevorzugt von 51 Gew.% bis 200 Gew.% erwiesen, wobei sich die Gewichtsanteile jeweils auf das Gesamtgewicht des Vliesstoffs ohne Füllpolymer beziehen.

Darüber hinaus kann der erfindungsgemäße Vliesstoff auch lichtstreuende Füllstoffe mit einem sehr hohen Brechungsindex von vorzugsweise mehr als 1,6 oder speziellen optischen Eigenschaften aufweisen. Dabei können diese Materialien beispielsweise im Füllpolymer eingebettet vorliegen. Als geeignet haben sich hierfür insbesondere Al₂O₃, Silikate, Zirkonate Titanoxide aber auch fluoreszierende oder phosphoreszierende Materialien erwiesen. Diese Materialien erleichtern es auch bei geringen Dicken und Beschichtungsmengen hinreichende lichtstreuende Eigenschaften zu erzielen. Wenn vorhanden, weist der Vliesstoff die vorgenannten Materialien in einer Menge von mindestens 0,1 Gew.%, beispielsweise von 0,1 Gew.% bis 5 Gew.%, bezogen auf das Gesamtgewicht des Vliesstoffs ohne Füllpolymer, auf.

Der erfindungsgemäß verwendete Vliesstoff weist Matrixfasern und/oder Bindefasern auf. Unter Matrixfasern sind erfindungsgemäß Fasern zu verstehen, die im Unterschied zu den Bindefasern nicht oder nur unwesentlich thermisch aufgeschmolzen wurden. Dabei können die Matrixfasern lediglich aus einer Faserart bestehen oder Fasergemische enthalten. Die Bindefasern dagegen liegen im Vliesstoff zumindest teilweise mit sich selbst und/oder mit den Matrixfasern thermisch verschmolzen vor. Dabei können die Bindefasern lediglich aus einer Faserart bestehen oder Fasergemische enthalten. Ebenfalls denkbar ist, dass die Bindefasern thermisch verschmolzene und nicht verschmolzene Faserkomponenten aufweisen, beispielsweise wenn sie Kernmantelfasern sind. In diesem Falle ist lediglich die thermisch verschmolzene Komponente (z.B. Mantel) als Bindefaserpolymer anzusehen und die nicht verschmolzene Komponente (z.B. Kern) als Matrixfaserpolymer.

Die Matrixfasern sowie die Bindefasern (a) sind erfindungsgemäß bevorzugt Stapelfasern und/oder Kurzschnittfasern. Erfindungsgemäß sind unter Stapelfasern, im Unterschied zu Filamenten, die eine theoretisch unbegrenzte Länge aufweisen, Fasern mit einer begrenzten Länge, von vorzugsweise 1 mm bis 90 mm, noch bevorzugter von 1 mm bis 30 mm zu verstehen. Erfindungsgemäß sind unter Kurzschnittfasern Fasern mit einer Länge von vorzugsweise 1 mm bis 12 mm, noch bevorzugter von 3 mm bis 6 mm zu verstehen.

Erfindungsgemäß sind die Bindefasern in dem Vliesstoff zumindest zum Teil verschmolzen, was ebenfalls einen vorteilhaften Einfluss auf die Leuchtdichte hat. Die Bindefasern können Bereiche aufweisen, die verschmolzen sind und Bereiche die nicht verschmolzen sind. Erfindungsgemäß bevorzugt liegen die Bindefasern an zumindest einigen Faserkreuzungen, vorzugsweise an zumindest 40 %, oder zumindest an 50 %, oder zumindest an 60 %, oder zumindest an 70 %, oder zumindest an 80 %, oder zumindest an 90 % der Kreuzungspunkten verschmolzen vor.

Erfindungsgemäß bevorzugt sind die Matrixfasern als Stapelfasern und/oder Kurzschnittfasern ausgebildet. Die Matrixfasern können Ein- oder Mehrkomponentenfasern sein. Aus Kostengründen kann es bevorzugt sein Einkomponentenfasern einzusetzen. Die Faserlängen betragen vorteilhafter Weise 1 mm bis 30 mm, noch bevorzugter von 2 mm bis 12 mm und insbesondere von 3 mm bis 6 mm.

Die Matrixfasern können erfindungsgemäß die verschiedensten Matrixfaserpolymere enthalten, vorzugsweise Polyacrylnitril, Polyvinylalkohol, Viskose-, Cellulose, Polyamide, insbesondere Polyamid 6 und Polyamid 6.6, bevorzugt Polyolefine und ganz besonders bevorzugt Polyester, insbesondere Polyethylenterephthalat, Polyethylennaphthalat und Polybutylenterephthalat, und/oder Gemische hiervon. Dadurch kann der Brechungsindex der Matrixfasern gezielt auf den Brechungsindex des Füllpolymers eingestellt werden.

Vorteilhafterweise enthalten die Matrixfasern die vorgenannten Materialien in einem Anteil von mehr als 90 Gew. %, vorzugsweise von 95 Gew.% bis 100 Gew.%. Ganz besonders bevorzugt bestehen sie aus den zuvor genannten Materialien, wobei übliche Verunreinigungen und Hilfsmittel enthalten sein können.

Der Anteil an Matrixfasern beträgt erfindungsgemäß bevorzugt 1 bis 50 Gew.%, vorzugsweise von 1 bis 20 Gew.% und insbesondere von 1 bis 10 Gew.% jeweils bezogen auf das Gesamtgewicht des Vliesstoffs ohne Füllpolymer.

Der Titer der Matrixfasern kann in Abhängigkeit von der gewünschten Struktur des Vliesstoffs variieren. Als günstig hat sich insbesondere die Verwendung von Matrixfasern mit einem mittleren Titer von 0,06 bis 1,7 dtex, vorzugsweise von 0,1 bis 1,0 dtex erwiesen.

Praktische Versuche haben ergeben, dass die zumindest anteilige Verwendung von Mikrofasern mit einem mittleren Titer von weniger als 1 dtex, vorzugsweise von 0,1 bis 1 dtex als Matrixfasern sich vorteilhaft auf die Größe und Struktur der Porengrößen und inneren Oberfläche sowie auf die Dichte des Vliesstoffs auswirkt. Dabei haben sich Anteile von mindestens 1 Gew.%, bevorzugt von 1 Gew.% bis 25 Gew.%, insbesondere bevorzugt von 5 Gew.% bis 10 Gew,%, jeweils bezogen auf das Gesamtgewicht des Vliesstoffs ohne Füllpolymer, als besonders günstig erwiesen. Hierdurch können gezielt die optischen Eigenschaften des Vliesstoffs eingestellt werden, da die Porengröße und Porosität die Füllung mit dem Füllpolymer entscheidend beeinflusst und somit einen direkten Einfluss auf die Diffusions- und Transmissionseigenschaften hat.

Die Matrixfasern können in den verschiedensten Formen ausgebildet sein, beispielsweise als Flach-, Hohl-, Rund-,Oval-, Trilobal-, Multilobal- Bico-, und/oder Island in the Sea- Faser. Erfindungsgemäß bevorzugt ist der Querschnitt der Matrixfasern rund ausgebildet.

Als Bindefasern können die üblichen zu diesem Zweck verwendeten Fasern eingesetzt werden sofern sie zumindest teilweise thermisch verschmolzen werden können. Bindefasern können Einkomponenten- und/oder auch Mehrkomponenten- Fasern sein. Erfindungsgemäß besonders geeignete Bindefasern sind Fasern, die mindestens ein Bindefaserpolymer mit einem Schmelzpunkt, der unterhalb des Schmelzpunkts der zu bindenden Matrixfasern liegt, vorzugsweise unterhalb von 250°C, besonders bevorzugt von 70 bis 230°C, insbesondere von 150 bis 225 °C, enthalten. Geeignete Bindefasern sind insbesondere Fasern, die thermoplastische Polyester und/oder Copolyester, insbesondere Polybutylenterephthalat, Polyolefine, insbesondere Polypropylen, Polyamide, Polyvinylalkohol, oder auch Copolymere sowie deren Copolymere und Gemische als Bindefaserpolymer enthalten.

Erfindungsgemäß besonders geeignete Bindefasern sind Mehrkomponentenfasern, vorzugsweise Bikomponentenfasern, insbesondere Kern/Mantel-Fasern. Kern/Mantel-Fasern enthalten mindestens zwei Faserpolymere mit unterschiedlicher Erweichungs- und/oder Schmelztemperatur. Bevorzugt bestehen die Kern/Mantel-Fasern aus diesen zwei Faserpolymeren. Dabei ist diejenige Komponente, die die niedrigere Erweichungs- und/oder Schmelztemperatur aufweist, an der Faseroberfläche (Mantel) und diejenige Komponente, die die höhere Erweichungs- und/oder Schmelztemperatur aufweist, bevorzugt im Kern zu finden.

Bei Kern/Mantel-Fasern kann die Bindefunktion durch die Materialien, die an der Oberfläche der Fasern angeordnet sind, ausgeübt werden. Bei Kern/Mantel-Fasern fungieren mithin die Materialien, die an der Oberfläche der Fasern angeordnet sind, als Bindefaserpolymer. Für den Mantel können die verschiedensten Materialien eingesetzt werden. Bevorzugte Materialien für den Mantel sind erfindungsgemäß Polybutylenterephthalat (PBT), Polyamid (PA), Polyethylen (PE), Copolyamide und/oder auch Copolyester. Für den Kern können ebenfalls die verschiedensten Materialien eingesetzt werden. Bevorzugte Materialien für den Kern sind erfindungsgemäß Polyester (PES), insbesondere Polyetylenterephthalat (PET) und/oder Polyethylennaphthalat (PEN) und/oder Polyolefine (PO).

Die Verwendung von Kern-Mantel-Bindefasern ist erfindungsgemäß bevorzugt, da so eine besonders homogene Verteilung der Bindemittelkomponente im Vliesstoff erzielt werden kann.

In praktischen Versuchen konnten mit PET-PBT-Bikomponentenfasern und/oder PET-CoPES-Bikomponentenfasern Vliesstoffe mit sehr guten Eigenschaften erhalten werden. Ebenfalls gute Ergebnisse konnten mit Fasern aus der Klasse der Polyolefine, wie insbesondere Polyethylen-Polypropylen-Bikomponentenfasern erzielt werden. Ebenfalls geeignet könnten PEN-PET-Bikomponentenfasern sein.

Ebenfalls denkbar ist jedoch auch die Verwendung von Einkomponenten-Bindefasern, sofern diese zumindest teilweise thermisch verschmolzen werden können. Die Wahl der Einkomponenten-Bindefasern hängt dabei von der eingesetzten Matrixfaser ab. Beispielsweise eignen sich Polyamid 6-Bindefasern für die Bindung von Polyamid 66-Matrixfasern und Copolyester für die Bindung von Polyetylenterephthalat.

Die mittleren Faserlängen der Bindefasern betragen vorteilhafter Weise 1 mm bis 30 mm, noch bevorzugter von 1,5 mm bis 12 mm und insbesondere von 3,0 mm bis 6,0 mm.

Der Anteil an Bindefasern beträgt erfindungsgemäß 50 bis 99 Gew.%, vorzugsweise von 80 bis 99 Gew.% und insbesondere von 90 bis 95 Gew.% jeweils bezogen auf das Gesamtgewicht des Vliesstoffs ohne Füllpolymer.

Der mittlere Titer der Bindefasern kann in Abhängigkeit von der gewünschten Struktur des Vliesstoffs variieren. Als günstig hat sich die Verwendung von Bindefasern mit einem mittleren Titer von 0,2 bis 2,2 dtex, vorzugsweise von 0,8 bis 1,3 dtex erwiesen.

Die Bindefasern können durch eine Thermofusion untereinander und/oder mit den Matrixfasern des Vliesstoffs verbunden werden. Als besonders geeignet hat sich die Verfestigung mittels durchströmender Heißluft in einem Heißluftbandofen und/oder auf einer von heißer Luft durchströmten Trommel erwiesen.

Die Dickenkalibrierung kann zwischen 2 glatten Kalanderwalzen eingestellt werden.
Die zur Herstellung des Vliesstoffs eingesetzten Fasern können grundsätzlich verschiedene Farben aufweisen. Gemäß einer bevorzugten Ausführungsform der Erfindung werden jedoch transparente Fasern eingesetzt.

Der Querschnitt der Bindefasern (zumindest vor der thermischen Verfestigung), unabhängig davon, ob Ein-- oder Mehrkomponentenfasern vorliegen, kann rund, oval, oberflächlich gerillt, sternchenförmig, bändchenförmig, tri- oder multilobal ausgebildet sein. Erfindungsgemäß bevorzugt ist der Querschnitt der Fasern rund ausgebildet.

Die den erfindungsgemäß verwendeten Vliesstoff aufbauenden Fasern können mechanisch oder aerodynamisch gereckt oder verstreckt worden sein. An der Verwendung derartiger Fasern ist vorteilhaft, dass orientierte Fasern einen geringen Schrumpf, einen höheren E-Modul und somit eine zugsweise höhere Festigkeit aufweisen. Es ist auch denkbar, den verstreckten Fasern solche entweder des gleichen oder unterschiedlichen Matrixfaserpolymeraufbaues zuzumischen, die nur teilweise (partiell) oder überhaupt nicht verstreckt worden sind.

Zur Steuerung der Diffusionseigenschaften des Vliesstoffs können die Matrix- und/oder Bindefasern ferner Mattierungsmittel, wie Titandioxid, enthalten. Zu diesem Zweck haben sich insbesondere Anteile von 150 ppm bis 10 Gew.%, Mattierungsmittel, bezogen auf das Gesamtgewicht des Vliesstoffs ohne Füllpolymer, als zweckmäßig erwiesen.

Denkbar ist es ferner den Vliesstoff flammenhemmend auszurüsten, beispielsweise mit einem Phosphonsäurederivat. Hierdurch kann die Brandgefahr bei Kontakt mit heißen Lichtquellen verringert werden.

Grundsätzlich ist denkbar den Vliesstoff in Form eines Lagenverbunds einzusetzen. Dabei könnten die weiteren Lagen als Verstärkungslagen, beispielsweise in Form eines Scrims ausgebildet sein und/oder Verstärkungsfilamente, Vliesstoffe, Gewebe, Gewirke, Gelege und/oder Folien, insbesondere Diffusor- oder Lichtlenkfolien, umfassen. Erfindungsgemäß bevorzugt weist der Vliesstoff jedoch einen einschichtigen Aufbau auf, da hierdurch optische Störungen durch Grenzflächenübergänge vermieden werden können.

Die Flächengewichte des erfindungsgemäß verwendeten Vliesstoffs können in Abhängigkeit von dem speziellen Anwendungszweck eingestellt werden. Gemäß einer bevorzugten Ausführungsform der Erfindung beträgt das Flächengewicht des Vliesstoffs, gemessen nach DIN EN 29073, vorteilhafter Weise von 30 bis 600 g/m², noch bevorzugter von 35 bis 500 g/m², noch bevorzugter von 40g/m² bis 400 g/m², insbesondere von 55 bis 200 g/m². Es hat sich gezeigt, dass bei diesen Gewichtsbereichen genügend Fasermasse vorhanden ist, um einen Vliesstoff mit ausreichender Eigensteifigkeit und einer planen Lage (kein Schüsseln) zu erhalten. Auch in diesem Zusammenhang ist es vorteilhaft, wenn der Vliesstoff einen einschichtigen Aufbau aufweist. Einschichtige Vliesstoffe zeigen nämlich nur eine geringe Schüsselneigung, da keine Lagenspannungen auftreten.

Die Dicke des Vliesstoffs gemessen nach Prüfvorschrift EN 29073 - T2 beträgt vorzugsweise von 30 bis 400 µm, noch bevorzugter von 60 bis 350 µm, noch bevorzugter von 80 bis 320 µm und insbesondere von 110 bis 320 µm.

Praktische Versuche haben ergeben, dass die Leuchtdichteverteilung verbessert werden kann, indem die Dichte des Vliesstoffs erhöht wird. Vor diesem Hintergrund beträgt die Dichte des Vliesstoffs (Rohdichte berechnet aus Flächengewicht und Dicke) vorzugsweise mindestens 0,4 g/cm³, beispielsweise 0,4 bis 1 g/cm³, und noch bevorzugter von 0,6 bis 0,9 g/cm³. Die Dichte des Vliesstoffs kann beispielsweise durch Verdichtungs-/Kalandrierschritte bei der Herstellung das Vliesstoffs erhöht werden.

Die Porosität des Vliesstoffs, berechnet aus der Dicke, dem Gewicht und den Dichten der verwendeten Materialien (P =(1 - FG/(d·& δ))·100 wobei FG das Flächengewicht in kg/m², d die Dicke in m und δ die Dichte in kg/m³ ist) beträgt vorzugsweise weniger als 40%, beispielsweise von 1 bis 40% und/oder von weniger als 30%, beispielsweise von 5 bis 30% und/oder von 10 bis 30%.

In einer bevorzugten Ausführungsform der Erfindung ist der Vliesstoff ein Nassvliesstoff, der mit einem Nasslegeverfahren hergestellt werden kann. Vorteilhaft hieran ist, dass neben den hohen Lichttransmissionsgraden auch sehr gute Lichtintensitätsverteilungen punktförmiger Lichtquellen, wie beispielsweise LEDs, erzielt werden. Ohne sich erfindungsgemäß auf einen Mechanismus festzulegen, wird vermutet, dass die hohen Leuchtdichten darauf zurückzuführen sind, dass die Nassvliesstoffe aufgrund ihrer Herstellung im Nasslegeverfahren eine äußerst homogene und isotrope Faserstruktur zeigen, die durch den hohen Anteil an zumindest zum Teil verschmolzenen Bindefasern sehr gleichmäßig verfestigt ist. Der hohe Anteil an Bindefasern ermöglicht zudem eine gute Oberflächeneinbindung der Fasern und eine gleichmäßige Durchbindung des Vliesstoffs über seinen Querschnitt, was sich ebenfalls vorteilhaft auf die Leuchtdichte auswirkt.

Der erfindungsgemäße verwendete Vliesstoff kann durch ein Verfahren hergestellt werden, das folgende Schritte umfasst:
- Bereitstellen einer Fasermischung, umfassend Matrixfasern und Bindefasern, wobei die Matrixfasern mindestens ein Matrixfaserpolymer und die Bindefasern mindestens ein Bindefaserpolymer enthalten, und Matrixfaserpolymer und/oder Bindefaserpolymer unabhängig voneinander einen Brechungsindex "n" von 1,3 bis 1,7, bevorzugt von 1,5 bis 1,65 aufweisen;
- Bereitstellen eines Füllpolymeres, das einen Brechungsindex "n" von 1,2 bis 1,7 aufweist, wobei die Differenz zwischen dem Brechungsindex des Matrixfaserpolymers und dem Brechungsindex des Füllpolymers und/oder die Differenz zwischen dem Brechungsindex des Bindefaserpolymers und dem Brechungsindex des Füllpolymers von 0,1 bis 0,4 beträgt, und
- Bildung einer wässrigen Faserdispersion durch Dispergieren der Fasermischung umfassend Matrixfasern und Bindefasern in einem wässrigen Medium;
- Entwässerung der Faserdispersion unter Ausbildung eines Faserflores;
- Trocknen, thermisch Binden des Faserflores um diesen zu einem Nassvliesstoff zu verfestigen;
- gegebenenfalls Kalandrieren des Nassvliesstoffs, um dessen Dicke einzustellen und zu verfestigen;
- Aufbringen des Füllpolymers auf den Nassvliesstoff unter Ausbildung des Vliesstoffs mit einer Gurleyzahl > 250 Sek./100 ml.

Die Bildung der wässrigen Faserdispersion kann auf im Bereich der Nassvliesstoffherstellung übliche Art und Weise durch Mischen der Fasern mit Wasser erfolgen.

Um einen möglichst homogenen und isotropen Vliesstoff zu erhalten, ist es von Vorteil, wenn die Fasern vor der Faserlegung gut durchmischt und gleichmäßig verteilt werden.

Zur Bildung der Faserdispersion werden die Bindefasern und Matrixfasern, vorzugsweise jeweils in einer solchen Menge eingesetzt, dass das Gewichtsverhältnis von Bindefasern zu Matrixfasern in der Faserdispersion von 1:1 bis zu 30:1, vorzugsweise von 5:1 bis zu 20:1 beträgt.

Die Faserdispersion kann neben den Fasern noch weitere Komponenten, beispielsweise Netzmittel, Entschäumer und/oder übliche Zusatzstoffe, enthalten.

Die Entwässerung der Faserdispersion unter Ausbildung des Faserflores kann ebenfalls auf im Bereich der Nassvliesstoffherstellung übliche Art und Weise beispielsweise durch Austragen der Mischung auf ein Sieb und Absaugen des Wassers geschehen.

Der Florbildung folgt ein Verfahrensschritt, indem das Faserflor getrocknet und thermisch gebunden wird um einem Nassvliesstoff zu erhalten.

Der gebildete Nassvliesstoff kann anschließend kalandriert werden. Die Kalandrierung bewirkt ein Kompaktieren des Nassvliesstoffs und gegebenenfalls ein autogenes Verschweißen der unter den Verfestigungsbedingungen schmelzaktivierten Fasern oder Faserbestandteilen.

Die Kalandrierung, falls durchgeführt, erfolgt durch Hitze und Druck. Geeignete Temperaturen sind in Abhängigkeit von der Art der für die Herstellung des Nassvliesstoffs verwendeten Fasern in der Regel 100 bis 250°C.

Im Falle der Verwendung von Polyolefinfasern werden in Abhängigkeit von der jeweils eingesetzten olefinischen Faser oder Faserkomponente Kalandertemperaturen von typischerweise 100 bis 160 °C verwendet. Die Kalanderbedingungen sind ganz besonders auf das Schmelz- und Erweichungsverhalten der im Einzelfall eingesetzten Matrixfaserpolymere abzustimmen. Beim Einsatz von Polyesterbindefasern betragen die Kalandertemperaturen typischerweise 170 bis 230 °C.

Der Kalander besteht vorteilhafterweise aus zwei glatten Walzen. In Einzelfällen, bei denen eine strukturierte Oberfläche gewünscht wird, kann eine Walze auch ein Prägemuster aufweisen.

Das Aufbringen des Füllpolymers auf den Vliesstoff kann auf die verschiedensten Arten und Weisen erfolgen. Bevorzugt wird dabei eine Dispersion oder Lösung des Polymers eingesetzt. Besonders bevorzugte Dispersionen sind filmbildende und/oder vernetzende Dispersionen oder Lösungen. Diese können in eine und/oder beiden Seiten des NassVliesstoffs aufgebracht werden, beispielsweise mittels Imprägnieren und/oder Beschichten. Bevorzugt ist dabei Beschichten, z.B. mittels eines Roll-Coating Verfahrens, da hierdurch eine besonders geschlossene Beschichtung erzielt werden kann. Durch Trocknung kann das Füllpolymers verfilmen. Ganz besonders bevorzugt wird das Füllpolymer in Form einer wässrigen Polymerdispersion auf den Vliesstoff aufgebracht.

Ebenfalls bevorzugt ist es, das Füllpolymer aus Vorläuferverbindungen herzustellen. Geeignete Vorläuferverbindungen sind Monomere und/oder Oligomere, die nach Auftragung auf den Nassvliesstoff beispielsweise durch eine UV Polymerisation in das Füllpolymer überführt werden können. Für diese Ausführungsform geeignete Monomere sind insbesondere die, die mittels einer radikalischen oder kationischen UV Polymerisation polymerisiert werden können. Ganz besonders bevorzugt sind dies Acrylate, Methacrylate, Acrylamide, Methacrylamide, Acrylsäure, Methacrylsäure, Polyurethanacrylate; aber auch Styrol und dessen Derivate. In manchen Fällen kann es zweckmäßig sein diese auch mit Vernetzern, wie z.B. N,N'-Methylenbisacrylamid (MBA) oder auch Divinylbenzol (DVB), zu vernetzen. Der Vorteil dieser Methode ist eine sehr gute Durchdringung des Vliesstoffs mit den Monomeren.

Dabei kann das Aufbringen des Polymers, in Abhängigkeit von der jeweils anvisierten finalen Anwendung und deren technischen Anforderungen, durch geeignete Auswahl der eingesetzten Technologie so erfolgen, dass das Polymer in den verschiedensten Bereichen, beispielsweise in Form der im folgenden beschriebenen Beschichtungen oder Kombinationen hiervon vorliegt:
- Innere Imprägnierung des Vliesstoffs (Zwischenräume zwischen den Fasern)
- Beschichtung einer Vliesstoffoberfläche (Auf den Fasern) oder beider Vliesstoffoberflächen

Der erfindungsgemäße Vliesstoff eignet sich aufgrund der hohen mit ihm erzielbaren Transmissionsgrade und gleichzeitig sehr guten Lichtdiffusionseigenschaften hervorragend als Lichtverteilungselement. Die Erfindung betrifft mithin ferner ein Lichtverteilungselement, enthaltend einen Vliesstoff gemäß einer oder mehrerer der hier genannten Ausführungsformen.

Ein weiterer Gegenstand der vorliegenden Erfindung ist eine Lichtquelle umfassend mindestens ein Beleuchtungsmittel und ein wie vorangehend beschriebener Vliesstoff als Lichtverteilungselement. Ein derartiges Beleuchtungsmittel zeichnet sich durch einen sehr hohen Leuchtenwirkungsgrad kombiniert mit einer hohen Gleichmäßigkeit aus.

Als Beleuchtungsmittel eignen sich insbesondere punktförmige Lichtquellen, wie LED's und/oder lineare Lichtquellen wie CCFLs "Cold Cathode Fluorescent Lamp". Dabei werden unter LED's "light emitting diode" lichtemittierende Dioden verstanden, die Licht in Wellenlängenbereichen vom Infrarot bis UV Licht emittieren können. Unter LED's sollen die verschiedensten Arten von lichtemittierenden Dioden verstanden werden einschließlich organische, anorganische oder laserbasierte Dioden.

Die erfindungsgemäße Lichtquelle kann für die verschiedensten Beleuchtungszwecke, beispielsweise zur Raumbeleuchtung und/oder Nachrichtenübermittlung dienen. Gemäß einer bevorzugten Ausführungsform der Erfindung wird die Lichtquelle zur Hintergrundbeleuchtung von Flüssigkristallbildschirmen (LCD) eingesetzt.

### Messmethoden:

### Brechungsindex:

Der Brechungsindex der verwendeten Materialien wird nach DIN EN ISO 489:1999-08 bestimmt.

### Flächengewicht:

Angelehnt an Prüfvorschrift EN 29073 - T1 werden für die Bestimmung der Flächengewichte jeweils 3 100x100mm große Proben ausgestanzt, die Proben gewogen und der Messwert mit 100 multipliziert.

### Bestimmung der Gewichtsanteile von Matrixfasern, Bindefasern und Füllpolymer:

Zunächst wird das Gewicht des Vliesstoffs ohne Füllpolymer (ungefüllter Vliesstoff) bestimmt und auf 100 Gew. % normiert. Anschließend werden die Gewichtsanteile von Matrixfasern, Bindefasern und Füllpolymer bestimmt und auf das Gewicht des Vliesstoff ohne Füllpolymer bezogen.

Beispiel: Ein Vliesstoff enthält 30 g/m² Matrixfasern, 50 g/m² Bindefasern und 30 g/m² Füllpolymer. Die Summe von Matrix- und Bindefasern von 80 g/m² entspricht 100 Gew. %. Der Gewichtsanteil der Matrixfasern beträgt mithin 37,5 Gew. %, der Gewichtsanteil der Bindefasern beträgt mithin 62,5 Gew. % und der Gewichtsanteil des Füllpolymers beträgt 37,5 Gew. %.

### Dicke:

Die Dicken werden gemäß Prüfvorschrift EN 29073 - T2 gemessen. Die Messfläche beträgt 2cm², der Messdruck 1000 cN/cm².

### Porosität:

Die Porositäten werden berechnet aus der Dicke, dem Gewicht und den Dichten der verwendeten Materialien (P =(1 - FG/(d·& δ))·100.

### Luftdurchlässigkeiten nach Gurley:

Die Luftdurchlässigkeiten werden gemäß ISO 5636-3 bestimmt.

### Leuchtdichte:

Die Leuchtdichte wird mit einem LED-Leuchtkasten bestimmt. Der Leuchtkasten hat hierbei folgende Maße: 275 x 400 x 275 mm (Breite x Höhe x Tiefe). Auf dem höhenverstellbaren Boden des Leuchtkastens sind 36 (6 x 6) weiße Leuchtdioden (SMD Bauteil, Lichtfarbe warmweiß, Lichtstrom 21 Im/LED, Abstrahlwinkel 120°, Betriebsspannung 12VDC) mit einem Abstand von 33,3 mm zueinander angebracht. Die transparente Abdeckplatte des Leuchtkastens besteht aus 2,5 mm dicken Acrylglas. Zur Bestimmung der Leuchtdichte wird der zu messende Vliesstoff auf die Abdeckplatte gelegt, der Abstand zwischen der aktivierten LED-Lichtquelle und dem Vliesstoff beträgt hierbei 33 mm.

Daraufhin wird mit der ortsauflösenden Leuchtdichtekamera im Abstand von 1m zum Diffusor die Leuchtdichteverteilung im abgedunkelten Raum aufgenommen. Anschließend lassen sich softwareunterstützt die relevanten Größen wie z.B. Maximum, Minimum, Mittelwert und Streuung aus den Leuchtdichtewerten L(x,y) bestimmen.

### Weiterreißfestigkeit:

Angelehnt an Prüfvorschrift DIN 53859 werden die Weiterreißfestigkeiten der Vliesstoffe bestimmt. Hierfür werden jeweils 3 Probenkörper in MD und CD mit der Größe 75 X 50 mm und einem Einschnitt von 50 mm ausgestanzt. Die durch den Einschnitt entstandenen Schenkel der Messproben werden in die Einspannklemmen der Zugprüfmaschine eingespannt (Klemmenabstand 50 mm) und mit einer Abzugsgeschwindigkeit von 200 mm/min auseinandergezogen. Da Membranen oft nicht in der Schnittrichtung weiterreißen, sind auch die Messproben zu berücksichtigen, die seitlich ausreißen. Es wird der Durchschnitt aus den ermittelten Werten gebildet.

### Luftdurchlässigkeitsmessungen :

Die Luftdurchlässigkeiten werden angelehnt an EN ISO 9237 bestimmt. Das Normklima ist gemäß DIN 50014 / ISO 554, das Prüfergebnis wird dm³/s*m² angegeben.

### Schrumpf:

Für die Bestimmung des Schrumpfes werden 100 mm x 100 mm große Muster ausgestanzt und eine Stunde bei 150° bzw. 200°C in einem Labdryer der Fa. Mathis gelagert. Anschließend wird der Schrumpf der Muster bestimmt.

### Porengrößen:

Die Porengrößen werden gemäß ASTM D6767 - 16 (Standard Test Method for Pore Size Characteristics of Geotextiles by Capillary Flow Test) bestimmt.

### Höchstzugkraft:

Die Höchstzugkraft (HZK) der Werkstoffe wird nach EN 29073 T3 bestimmt.

Im Folgenden wird die Erfindung anhand mehrerer Beispiele näher erläutert.

### Beispiel 1

Mit 300 Teilen einer 35% wässrigen Plextol® BV 595 Dispersion der Fa. Archroma wird ein 100 cm breiter PET Nassvliesstoff (Dicke: 120µm, Flächengewicht: 85 g/m²) mittels eines Walzenbeschichtungsverfahren kontinuierlich beschichtet und bei 150°C getrocknet.

Es wird ein beschichteter Vliesstoff mit einem Flächengewicht von 120,13 g/m² und einer Dicke von 133 µm erhalten.

### Beispiel 2

Mit 300 Teilen einer 40% wässrigen Revacryl® SY 505 Dispersion der Fa. Synthomer wird ein 100 cm breiter PET Nassvliesstoff (Dicke: 120µm, Flächengewicht: 85 g/m²) mittels eines Walzenbeschichtungsverfahren kontinuierlich beschichtet und bei 150°C getrocknet.

Es wurde ein beschichteter Vliesstoff mit einem Flächengewicht von 136,6 g/m² und einer Dicke von 137 µm erhalten.

### Beispiel 3

Mit 300 Teilen einer 45% wässrigen AXILAT® D 985 Dispersion der Fa. Momentive wurde ein 100 cm breiter PET Nassvliesstoff (Dicke: 120µm, Flächengewicht: 85 g/m²) mittels eines Walzenbeschichtungsverfahren kontinuierlich beschichtet und bei 150°C getrocknet.

Es wurde ein beschichteter Vliesstoff mit einem Flächengewicht von 130,6 g/m² und einer Dicke von 135 µm erhalten.

### Vergleichsbeispiel 4

Thermisch verfestigte Polyester-Nassvliesstoff aus 95% Bindefaser (PBT/PET, Faserdurchmesser > 1dtex) und 5% Mikrofaser (PET, Faserdurchmesser < 0,3 dtex). Die Dicken-Kalibrierung des NassVliesstoffs erfolgte dabei inline nach der Vlieslegung oder in einem separaten Arbeitsschritt. Die Inlineverfestigung erfolgte dabei mit einem Kalander mit glatten Walzenoberflächen und den Walzenkombinationen Stahl-Stahl, Stahl-Scappa bzw. Stahl-Silikon bei einer Temperatur von 170 - 225 °C. Die Liniendrücke bei allen Materialien lagen im Bereich 120 - 230 N/mm bei Flächengewicht von 85 g/m² und einer Dicke von 120µm.

**Physikalische Werte: Tabelle übertragen.**

| | Beispiel 1 | Beispiel 2 | Beispiel 3 | Vergleichsbeispiel 4 |
|---|---|---|---|---|
| Dicke [µm] | 133 | 137 | 135 | 120 |
| Gewicht [g/m²] | 128,13 | 136,6 | 130,6 | 85 |
| HZK [N] (MD) | 263 | 307 | 314 | 300 |
| HZK [N] | 184 | 200 | 191 | 200 |
| WRK [N] (MD) | 0,85 | 0,87 | 0,65 | 0,43 |
| WRK [N] (CD) | 0,74 | 0,76 | 0,9 | 0,54 |
| Mittlere Leuchtdichte [cd/m2] | 2822 | 2796 | 2474 | 2114 |
| Streuung der Leuchtdichte (sigma) [cd/m2] | 115 | 129 | 143 | 184 |
| Schrumpf [%] | < 1 | < 1 | < 1 | < 1 |
| Gurleyzahl sek. [100 ml] | >250 | >250 | >250 | < 100 |
| Porosität [%] | 25 | 29 | 28 | 51 |

Obige Tabelle zeigt, dass die erfindungsgemäßen Beispiele 1 -3 bei vergleichbaren Flächengewichten und Dicken eine höhere Leuchtdichte und gleichzeitig eine niedrigere Streuung (Standardabweichung σ) der Leuchtdichte als das Vergleichsbeispiel 4 aufweisen. Dies deutet daraufhin, dass sie eine höhere Gleichmäßigkeit aufweisen.

## Patentansprüche

1. Verwendung eines Vliesstoffs, bevorzugt eines Nassvliesstoffs, als Lichtverteilungselement, wobei der Vliesstoff
a1) 1-50 Gew.% Matrixfasern,
a2) 50-99 Gew.% zumindest teilweise thermisch verschmolzene Bindefasern, und
b) 20-200 Gew.% mindestens eines Füllpolymers aufweist, wobei sich die Gewichtsanteile von Matrixfasern, Bindefasern und Füllpolymer jeweils auf das Gesamtgewicht des Vliesstoffs ohne Füllpolymer beziehen und wobei
- die Matrixfasern mindestens ein Matrixfaserpolymer und die Bindefasern mindestens ein Bindefaserpolymer enthalten,
- Matrixfaserpolymer und/oder Bindefaserpolymer unabhängig voneinander einen nach DIN EN ISO 489:1999-08 bestimmten Brechungsindex "n" von 1,3 bis 1,7, bevorzugt von 1,5 bis 1,65 aufweisen,
- das Füllpolymer einen nach DIN EN ISO 489:1999-08 bestimmten Brechungsindex "n" von 1,2 bis 1,7 aufweist,
- die Differenz zwischen dem Brechungsindex des Matrixfaserpolymers und dem Brechungsindex des Füllpolymers und/oder die Differenz zwischen dem Brechungsindex des Bindefaserpolymers und dem Brechungsindex des Füllpolymers von 0,1 bis 0,4 beträgt, **dadurch gekennzeichnet dass** der Vliesstoff eine gemäß ISO 5636-3 bestimmte Gurleyzahl > 250 Sek./100 ml aufweist.

2. Verwendung nach Anspruch 1, **dadurch gekennzeichnet dass** der Vliesstoff eine nach der Beschreibung bestimmte Porosität von weniger als 30% aufweist.

3. Verwendung nach Anspruch 1 oder 2, **dadurch gekennzeichnet dass** das Füllpolymer als flächige Beschichtung ausgebildet ist.

4. Verwendung nach einem oder mehreren der vorgenannten Ansprüche, **dadurch gekennzeichnet dass** das Füllpolymer ausgewählt ist aus der Gruppe bestehend aus Polyacrylaten, Polymethacrylaten, Polyurethanacrylaten und Polyurethanmethacrylaten, Polyurethanen, Polyamiden, Polyvinyledenflourid (PVDF), Polyetheretherketon (PEEK), Polycarbonat (PC), Polyolefine (PO), Cyclische Polyolefincopolymere(COC) sowie deren Gemische.

5. Verwendung nach einem oder mehreren der vorgenannten Ansprüche, **dadurch gekennzeichnet dass** der Vliesstoff eine nach der Beschreibung bestimmte mittlere Leuchtdichte von mehr als 2200 cd/m und/oder eine Streuung Sigma von weniger als 180 cd/m² aufweist.

6. Verwendung nach einem oder mehreren der vorgenannten Ansprüche, **dadurch gekennzeichnet dass** der Vliesstoff eine nach der Beschreibung bestimmte Weiterreißfestigkeit in mindestens einer Richtung von mehr als 0,6 N aufweist.

7. Verwendung nach einem oder mehreren der vorgenannten Ansprüche, **dadurch gekennzeichnet dass** der Vliesstoff eine nach EN 29073 - T3 bestimmte Höchstzugkraft in mindestens einer Richtung von mehr als 180 N aufweist.

8. Verwendung nach einem oder mehreren der vorgenannten Ansprüche, **dadurch gekennzeichnet dass** der Vliesstoff eine nach Prüfvorschrift EN 29073 - T2 gemessene Dicke von 30 bis 400 µm aufweist.

9. Verwendung nach einem oder mehreren der vorgenannten Ansprüche, **dadurch gekennzeichnet, dass** der Vliesstoff einen nach der Beschreibung bestimmten Schrumpf von kleiner als 2 % aufweist.

10. Verwendung nach einem oder mehreren der vorgenannten Ansprüche, **dadurch gekennzeichnet, dass** das Füllpolymer hergestellt ist ausgehend von einem Füllpolymeredukt mit einem Schmelzpunkt und/oder Erweichungspunkt, der unter dem Schmelzpunkt des Matrixfaserpolymers und/oder des Bindefaserpolymers liegt.

11. Verwendung nach einem oder mehreren der vorgenannten Ansprüche, **dadurch gekennzeichnet dass** der Vliesstoff lichtstreuende Füllstoffe mit einem Brechungsindex von mehr als 1,6 enthält.

12. Verwendung nach einem oder mehreren der vorgenannten Ansprüche, **dadurch gekennzeichnet, dass** die Matrixfasern einen mittleren Titer von 0,06 bis 1,7 dtex und/oder die Bindefasern einen mittleren Titer von 0,2 bis 2,2 dtex aufweisen.

13. Verwendung nach einem oder mehreren der vorgenannten Ansprüche, **dadurch gekennzeichnet, dass** der Vliesstoff eine nach der Beschreibung bestimmte Dichte von mindesten 0,4 g/cm³ aufweist.

14. Verwendung nach einem oder mehreren der vorgenannten Ansprüche, **dadurch gekennzeichnet, dass** der Vliesstoff einen einschichtigen Aufbau aufweist.

15. Lichtquelle, umfassend mindestens ein Beleuchtungsmittel und einen wie in den vorangehenden Ansprüchen beschriebenen Vliesstoff als Lichtverteilungselement.

## Claims

1. Use of a nonwoven, preferably of a wet-laid nonwoven, as a light diffusion element, where the nonwoven comprises
a1) 1-50 wt% of matrix fibres,
a2) 50-99 wt% of at least partly thermally fused binding fibres, and
b) 20-200 wt% of at least one filling polymer, where the weight fractions of matrix fibres, binding fibres and filling polymer are based in each case on the total weight of the nonwoven without filling polymer, and where
- the matrix fibres comprise at least one matrix fibre polymer and the binding fibres comprise at least one binding fibre polymer,
- matrix fibre polymer and/or binding fibre polymer independently of one another have a refractive index "n", determined according to DIN EN ISO 489:1999-08, of 1.3 to 1.7, preferably of 1.5 to 1.65,
- the filling polymer has a refractive index "n", determined according to DIN EN ISO 489:1999-08, of 1.2 to 1.7,
- the difference between the refractive index of the matrix fibre polymer and the refractive index of the filling polymer and/or the difference between the refractive index of the binding fibre polymer and the refractive index of the filling polymer is from 0.1 to 0.4, **characterized in that** the nonwoven has a Gurley number, determined according to ISO 5636 3, > 250 sec/100 ml.

2. Use according to Claim 1, **characterized in that** the nonwoven has a porosity, determined according to the description, of less than 30%.

3. Use according to Claim 1 or 2, **characterized in that** the filling polymer is configured as a sheetlike coating.

4. Use according to one or more of the preceding claims, **characterized in that** the filling polymer is selected from the group consisting of polyacrylates, polymethacrylates, polyurethane acrylates and polyurethane methacrylates, polyurethanes, polyamides, polyvinylidene fluoride (PVDF), poly-etheretherketone (PEEK), polycarbonate (PC), polyolefins (PO), cyclic polyolefin copolymers (COC) and mixtures thereof.

5. Use according to one or more of the preceding claims, **characterized in that** the nonwoven has a mean luminance, determined according to the description, of more than 2200 cd/m and/or a sigma spread of less than 180 cd/m².

6. Use according to one or more of the preceding claims, **characterized in that** the nonwoven has a tear resistance, determined according to the description, in at least one direction of more than 0.6 N.

7. Use according to one or more of the preceding claims, **characterized in that** the nonwoven has a tensile strength, determined according to EN 29073-T3, in at least one direction of more than 180 N.

8. Use according to one or more of the preceding claims, **characterized in that** the nonwoven has a thickness, measured according to test protocol EN 29073-T2, of 30 to 400 µm.

9. Use according to one or more of the preceding claims, **characterized in that** the nonwoven has a shrinkage, determined according to the description, of less than 2%.

10. Use according to one or more of the preceding claims, **characterized in that** the filling polymer is produced starting from a filling polymer reactant having a melting point and/or softening point which lies below the melting point of the matrix fibre polymer and/or of the binding fibre polymer.

11. Use according to one or more of the preceding claims, **characterized in that** the nonwoven comprises light-scattering fillers having a refractive index of more than 1.6.

12. Use according to one or more of the preceding claims, **characterized in that** the matrix fibres have an average linear density of 0.06 to 1.7 dtex and/or the binding fibres have an average linear density of 0.2 to 2.2 dtex.

13. Use according to one or more of the preceding claims, **characterized in that** the nonwoven has a density, determined according to the description, of at least 0.4 g/cm³.

14. Use according to one or more of the preceding claims, **characterized in that** the nonwoven has a single-layered construction.

15. Light source comprising at least an illuminant and, as a light diffusion element, a nonwoven as described in the preceding claims.

## Revendications

1. Utilisation d'un non-tissé, de préférence d'un non-tissé humide, en tant qu'élément de répartition de la lumière, le non-tissé comprenant :
a1) 1 à 50 % en poids de fibres de matrice,
a2) 50 à 99 % en poids de fibres de liaison au moins partiellement fondues thermiquement, et
b) 20 à 200 % en poids d'au moins un polymère de remplissage, les proportions en poids des fibres de matrice, des fibres de liaison et du polymère de remplissage se rapportant à chaque fois au poids total du non-tissé sans polymère de remplissage, et
- les fibres de matrice contenant au moins un polymère de fibres de matrice et les fibres de liaison contenant au moins un polymère de fibres de liaison,
- le polymère de fibres de matrice et/ou le polymère de fibres de liaison présentant indépendamment l'un de l'autre un indice de réfraction « n », déterminé selon DIN EN ISO 489:1999-08, de 1,3 à 1,7, de préférence de 1,5 à 1,65,
- le polymère de remplissage présentant un indice de réfraction « n », déterminé selon DIN EN ISO 489:1999-08, de 1,2 à 1,7,
- la différence entre l'indice de réfraction du polymère de fibres de matrice et l'indice de réfraction du polymère de remplissage et/ou la différence entre l'indice de réfraction du polymère de fibres de liaison et l'indice de réfraction du polymère de remplissage étant de 0,1 à 0,4, **caractérisée en ce que** le non-tissé présente un nombre de Gurley, déterminé selon ISO 5636-3, > 250 s/100 ml.

2. Utilisation selon la revendication 1, **caractérisée en ce que** le non-tissé présente une porosité, déterminée selon la description, de moins de 30 %.

3. Utilisation selon la revendication 1 ou 2, **caractérisée en ce que** le polymère de remplissage est configuré sous la forme d'un revêtement surfacique.

4. Utilisation selon une ou plusieurs des revendications précédentes, **caractérisée en ce que** le polymère de remplissage est choisi dans le groupe constitué par les polyacrylates, les polyméthacrylates, les polyacrylates d'uréthane et les polyméthacrylates d'uréthane, les polyuréthanes, les polyamides, le polyfluorure de vinylidène (PVDF), la polyéther-éther-cétone (PEEK), le polycarbonate (PC), les polyoléfines (PO), les copolymères de polyoléfines cycliques (COC), ainsi que leurs mélanges.

5. Utilisation selon une ou plusieurs des revendications précédentes, **caractérisée en ce que** le non-tissé présente une densité lumineuse moyenne, déterminée selon la description, de plus de 2 200 cd/m et/ou une dispersion sigma de moins de 180 cd/m².

6. Utilisation selon une ou plusieurs des revendications précédentes, **caractérisée en ce que** le non-tissé présente une résistance à la propagation de déchirures dans au moins une direction, déterminée selon la description, de plus de 0,6 N.

7. Utilisation selon une ou plusieurs des revendications précédentes, **caractérisée en ce que** le non-tissé présente une force de traction maximale dans au moins une direction, déterminée selon EN 29073-T3, de plus de 180 N.

8. Utilisation selon une ou plusieurs des revendications précédentes, **caractérisée en ce que** le non-tissé présente une épaisseur, mesurée selon les instructions d'essais EN 29073-T2, de 30 à 400 µm.

9. Utilisation selon une ou plusieurs des revendications précédentes, **caractérisée en ce que** le non-tissé présente un retrait, déterminé selon la description, de moins de 2 %.

10. Utilisation selon une ou plusieurs des revendications précédentes, **caractérisée en ce que** le polymère de remplissage est fabriqué à partir d'un produit de départ de polymère de remplissage ayant un point de fusion et/ou un point de ramollissement qui se situe en-dessous du point de fusion du polymère de fibres de matrice et/ou du polymère de fibres de liaison.

11. Utilisation selon une ou plusieurs des revendications précédentes, **caractérisée en ce que** le non-tissé contient des charges dispersant la lumière ayant un indice de réfraction de plus de 1,6.

12. Utilisation selon une ou plusieurs des revendications précédentes, **caractérisée en ce que** les fibres de matrice présentent un titre moyen de 0,06 à 1,7 dtex et/ou les fibres de liaison présentent un titre moyen de 0,2 à 2,2 dtex.

13. Utilisation selon une ou plusieurs des revendications précédentes, **caractérisée en ce que** le non-tissé présente une densité, déterminée selon la description, d'au moins 0,4 g/cm³.

14. Utilisation selon une ou plusieurs des revendications précédentes, **caractérisée en ce que** le non-tissé présente une structure monocouche.

15. Source de lumière, comprenant au moins un moyen d'éclairage et un non-tissé tel que décrit dans les revendications précédentes en tant qu'élément de répartition de la lumière.
